# EUROPÄISCHE PATENTSCHRIFT

(11) **EP 1 761 800 B1**
(45) Veröffentlichungstag und Bekanntmachung des Hinweises auf die Patenterteilung: **13.06.2012**
(21) Anmeldenummer: 05743007.6
(22) Anmeldetag: 12.04.2005
(51) Int. Cl.: G01S 13/58, G01S 13/34

(54) **RADARSENSOR UND VERFAHREN ZUR AUSWERTUNG VON OBJEKTEN**
RADAR SENSOR AND PROCESS FOR EVALUATING OBJECTS
CAPTEUR RADAR ET PROCEDE POUR EVALUER DES OBJETS

(30) Priorität: 22.06.2004 DE 102004030133
(43) Veröffentlichungstag der Anmeldung: 14.03.2007
(73) Patentinhaber: ROBERT BOSCH GMBH, 70442 Stuttgart (DE)
(72) Erfinder: HILSEBECHER, Joerg, 70839 Gerlingen (DE); SELINGER, Joachim, 70597 Stuttgart (DE)
(86) Internationale Anmeldenummer: PCT/EP2005/051605
(87) Internationale Veröffentlichungsnummer: WO 2005/124391

(56) Entgegenhaltungen:
- EP-A- 0 939 322
- WO-A-2004/029650
- DE-A1- 19 538 309
- US-A- 3 149 326
- US-A- 5 963 162
- US-A- 5 963 163
- ROHLING H ET AL: "Waveform design principles for automotive radar systems" PROCEEDINGS OF CIE. INTERNATIONAL CONFERENCE ON RADAR, 15. Oktober 2001 (2001-10-15), Seiten 1-4, XP002239085

## Beschreibung

Die vorliegende Erfindung betrifft ein Verfahren und einen Radarsensor, der frequenzmodulierte Sendesignale aussendet und an Objekten im Sensorerfassungsbereich reflektierte Teilwellen empfängt, wobei für jedes reflektierende Objekt einer jeden Frequenzrampe eine Frequenzverschiebung des empfangenen Signals gegenüber dem gesendeten Signal bestimmt wird und aus der Kombination der Frequenzverschiebungen mehrerer Rampen die Relativgeschwindigkeiten und die Abstände der erkannten Objekte bestimmbar sind, dass die in vorhergehenden Messzyklen erkannten Objekten in einem Speicher abgelegt werden, deren Relativgeschwindigkeit und deren Abstand für einen zukünftigen Messzyklus vorausberechnet werden und die zu erwartenden Frequenzverschiebungen bestimmt werden und die Kombination der Frequenzverschiebungen mehrerer Rampen zur Bestimmung der Relativgeschwindigkeiten und der Abstände für Objekte durchgeführt wird, die noch nicht im Speicher abgelegt sind.

### Stand der Technik

Aus der Veröffentlichung "Adaptive Fahrgeschwindigkeitsregelung ACC", herausgegeben von der Robert Bosch GmbH, April 2002 (ISBN-3-7782-2034-9) ist ein Radarsensor sowie ein Verfahren zum Betreiben dieses Radarsensors bekannt, bei dem frequenzmodulierte Radarsignale ausgesendet werden und an Objekten innerhalb des Sensorerfassungsbereichs reflektierte Teilwellen empfangen werden. Durch die Mischung der Sende- und der Empfangssignale entstehen Frequenzsignale, die eine Linearkombination aus Relativgeschwindigkeit und Abstand des erkannten Objektes darstellen. Durch die Verwendung mehrerer steigender und fallender Frequenzrampen ist es möglich, mehrere Linearkombinationen, die die Relativgeschwindigkeit und den Abstand des Objekts beinhalten, zu überlagern, wodurch sich ein eindeutiger Schnittpunkt dieser Geraden ergibt und der die tatsächliche Relativgeschwindigkeit und den tatsächlichen Abstand des Objekts darstellt Durch die Verwendung mehrerer steigender und fallender Frequenzrampen mit unterschiedlichen Steigungen ist es möglich, auch bei mehreren Objekten im Sensorerfassungsbereich eventuell auftretende Mehrdeutigkeiten aufzulösen. Nachteilig bei diesem Stand der Technik ist es, dass wenn pro Messzyklus eine steigende und eine fallende Frequenzrampe mit einer ersten Steigung sowie eine steigende und fallende Frequenzrampe mit einer zweiten Steigung verwendet werden, also insgesamt vier Frequenzrampen verwendet werden, der Rechenaufwand zur Bestimmung der Relativgeschwindigkeit und der Abstände mehrerer erkannter Objekte eine enorme Rechenleistung zur Auswertung der Linearkombinationen notwendig macht. Werden beispielsweise innerhalb eines Messzyklusses mit vier Frequenzrampen insgesamt acht Objekte detektiert, so ergeben sich hieraus 8 * 4 = 32 Geraden sowie 8⁴ = 4096 Geraden-Schnittpunkte, die hinsichtlich tatsächlich vorhandener Objekte oder hinsichtlich Scheinobjekten überprüft werden müssen, da von vornherein noch nicht bekannt ist, welche Geraden-Schnittpunkte reale Objekte darstellen. Bei einem Anstieg der Anzahl an detektierten Objekten steigt damit der Rechenaufwand mit vierter Potenz, so dass teure und aufwendige Auswerteeinrichtungen notwendig sind.

Aus der US 5,963,162 ist ein Objektdetektionssystem bekannt, das mittels FMCW-Modulation arbeitet, bei dem der Verlust einer steigenden oder einer fallenden Frequenzrampe kompensierbar ist und dennoch eine Mehrzahl an Objekten erkannt werden kann indem mehrere steigende und fallende Frequenzrampen ausgesendet werden und aus den weiteren Frequenzrampen die Informationen gewonnen werden, die durch die fehlende Frequenzrampe verloren gegangen sind.

Aus der WO2004/029650 ist ein Verfahren zur Abstands- und Geschwindigkeitsmessung an mehreren Objekten mittels FMCW-Radar bekannt, bei dem Messungen mit mindestens zwei verschiedenen Frequenzrampen zügig wiederholt werden, in jeder Messung das gesendete Signal mit dem empfangenen Signal gemischt wird und das Spektrum des gemischten Signals aufgenommen wird, in einer Matching-Prozedur, die zu desselben Objekt gehörenden Peaks in den für verschiedene Rampen aufgenommenen Spektren einander zugeordnet werden und die Abstände und Geschwindigkeiten der Objekte aus den Frequenzen der Peaks berechnet werden und in einer Tracking-Prozedur die zu verschiedenen Zeiten gemessenen Objekte anhand der Konsistenz ihrer Abstands- und Geschwindigkeitsdaten miteinander identifiziert werden und jeder Messzyklus höchstens drei Messungen mit verschiedenen Frequenzrampen umfasst, für jede plausible Kombination aus zwei Peaks, von denen einer bei einer ersten Messung und der andere bei einer zweiten Messung desselben Zyklusses aufgenommen wurde, der Abstand und die Geschwindigkeit eines durch diese Peaks repräsentierten möglichen Objekts berechnet werden, aus dem Abstand und der Geschwindigkeit des möglichen Objekts das erwartete Resultat mindestens einer weiteren Messung berechnet wird und das mögliche Objekt verworfen wird, wenn nicht mindestens ein erwartendes Resultat mit dem gemessenen Resultat übereinstimmt.

Aus der US 5,963,163 ist ein Verfahren und eine Vorrichtung zur FMCW-Modulation eines Radarsystems bekannt, bei dem Mehrdeutigkeiten zwischen dem Abstand und der Geschwindigkeit beseitigt werden indem mit zwei alternativen, parallelen und diskontinuierlichen Frequenzrampen moduliert wird, die einen konstanten Frequenzunterschied zueinander aufweisen und bei dem die Frequenz zwischen der ersten und der zweiten Rampe regelmäßig umgeschaltet wird. Aus der Phasendifferenz beider Empfangssignale der beiden Frequenzrampen kann auf den Abstand des Objekts geschlossen werden und aus der mehrdeutigen Abstands-Geschwindigkeits-Information dieser Frequenzrampen kann bei Kenntnis des Abstandes auf die Geschwindigkeit des Objektes geschlossen werden.

Aus der EP 0 939 322 ist ein computerisiertes Radarverfahren zur Messung von Abständen und Relativgeschwindigkeiten zwischen einem Fahrzeug und mehreren, vor ihm befindlichen Hindernissen, bekannt, wobei eine sichere Unterscheidung zwischen tatsächlichen Hindernissen und Scheinhindernissen erreicht wird, indem die Aussendung jeweils frequenzkonstanter Bursts, die in einem Frequenz-Zeit-Diagramm eine linear ansteigende, eine linear abfallende sowie eine frequenzkonstante, lineare Folge bilden und am Ende jedes reflektieren Bursts, also bei eingeschwungener Phase, ein komplexer Abtastwert erfasst wird und in einem Relativgeschwindigkeits-Abstands-Diagramm potentielle Hindernisse als Schnittspunkte von Geraden erfasst werden, die aus den reflektierten, linearen Burstfolgen gewonnen wurden. Aus einer speziellen Korrelation erfolgt anschließend im Rechner eine Aussortierung von Geisterhindernissen und nur die Empfangswerte für die verbleibenden Hindernisse werden weiterverarbeitet.

### Kern und Vorteile der Erfindung

Der Kern der vorliegenden Erfindung ist es, ein Verfahren und eine Vorrichtung zur Auswertung von Radarsensorsignalen anzugeben, das auch bei einer großen Anzahl an erkannten Objekten eine schnelle, eindeutige und zuverlässige Ermittlung der Relativgeschwindigkeit und des Abstands der erkannten Objekte ermöglicht. Durch den Einsatz des erfindungsgemäßen Verfahrens ist es möglich, kostengünstigere Rechenmittel zu verwenden, die auch bei einer geringeren Rechenleistung eine eindeutige Zuordnung ermöglichen. Erfindungsgemäß wird dies durch die Merkmale der unabhängigen Ansprüche gelöst. Vorteilhafte Weiterbildungen und Ausgestaltungen ergeben sich aus den Unteransprüchen.

Vorteilhafterweise wird zur Bildung der Frequenzrampen die Trägerfrequenz zeitlich linear erhöht und/oder verringert, so dass zwischen zeitlich konstanten Frequenzbereichen sowohl ansteigende als auch abfallende Frequenzrampen entstehen.

Weiterhin ist es vorteilhaft, dass die Frequenzrampen unterschiedliche Steilheiten aufweisen. Durch die Verwendung von Frequenzrampen mit unterschiedlichen Steilheiten erhält man in der Auswertung in einem vrel-d-Diagramm Geraden, die unterschiedliche Steilheiten aufweisen, wodurch die Auflösung von Mehrdeutigkeiten bei Erkennen mehrerer Objekte im Sensorerfassungsbereich aufgelöst werden können.

Weiterhin ist es vorteilhaft, dass für jede Steilheit einer Frequenzrampe eine ansteigende und eine abfallende Frequenzrampe vorgesehen ist. Hierdurch ist es möglich, ein Frequenzmodulationsmuster zu realisieren, bei dem eine erste, steil ansteigende Frequenzrampe vorhanden ist, danach eine abfallende Frequenzrampe, die betragsmäßig die gleiche Steilheit wie die erste Frequenzrampe aufweist, vorzusehen, weiterhin eine dritte Frequenzrampe vorzusehen, die ebenfalls ansteigend ist, jedoch mit einer Steilheit, die geringer als die erste oder zweite Frequenzrampe ist und eine vierte Frequenzrampe vorzusehen, während der die ausgesendete Frequenz abfällt und die betragsmäßig die gleiche Steilheit aufweist, wie die dritte Frequenzrampe. Hierdurch ergibt sich für jedes erkannte Objekt eine vrel-d-Gerade für jede Frequenzrampe im vrel-d- Diagramm, so dass der Abstand d und die Relativgeschwindigkeit vrel des erkannten Objekts durch den gemeinsamen Schnittpunkt der vier entsprechenden Geraden bestimmbar sind.

Weiterhin ist es vorteilhaft, dass die erkannten Objekte im Speicher in einer Trackingliste abgelegt werden. Durch das Ablegen der erkannten Objekte in der Trackingliste sowie deren dazugehörigen Daten ist es möglich, dass aus den erkannten Objekten ein geeignetes Zielobjekt, das zur Abstands- und Geschwindigkeitsregelung des eigenen Fahrzeugs herangezogen wird, auswählbar ist und die entsprechenden Daten dem Abstands- und Geschwindigkeitsregler zuführbar sind.

Weiterhin ist es vorteilhaft, dass für die im Speicher abgelegten Objekte der Abstand d und die Relativgeschwindigkeit vrel mittels einer Differenzialgleichung vorausberechnet werden, so dass der neue Abstand d und die neue Relativgeschwindigkeit vrel für den nächsten Messzyklus mit sehr großer Genauigkeit vorausbestimmbar sind.

Weiterhin ist es vorteilhaft, dass zur Bestimmung der Relativgeschwindigkeit und der Abstände der Objekte aus den Frequenzverschiebungen eine schnelle Fourier-Transformation (Fast Fourier-Transformation) durchgeführt wird, indem das mittels des Empfangsmischers gemischte Sende- und Empfangssignal, das anschließend digitalisiert wurde, in den Frequenzbereich transformiert wird, so dass hieraus Frequenzspitzen bzw. Frequenzpeaks mit einer charakteristischen Frequenz f_{D} bestimmbar sind.

Weiterhin ist es vorteilhaft, dass die Frequenzverschiebung durch eine Mischung des Sendesignals mit dem Empfangssignal ermittelt wird. Hierzu bietet es sich an, einen Empfangsmischer, beispielsweise in Form eines Ringmischers, zu verwenden, der an seinen Ausgangstoren nichtlineare Demodulationsdioden aufweist.

Von besonderer Bedeutung ist die Realisierung des erfindungsgemäßen Verfahrens in der Form eines Steuerelements, das für ein Steuergerät einen adaptiven Abstands- und Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in den Zeichnungen.

### Zeichnungen

Nachfolgend werden Ausführungsbeispiele der Erfindung anhand von Zeichnungen erläutert. Es zeigen:
- Figur 1: ein beispielhaftes Modulationsschema, nach dem die Sendefrequenz in Abhängigkeit der Zeit verändert wird,
- Figur 2: ein Frequenzspektrum, in dem beispielhaft Frequenzpeaks dargestellt sind, die durch Mischung des Sendesignals mit dem Empfangssignal entstehen,
- Figur 3: ein Relativgeschwindigkeits-Abstands-Diagramm, in dem die ermittelten vrel-d-Geraden zur Bestimmung des Abstands und der Relativgeschwindigkeit des Objekts eingezeichnet sind und
- Figur 4: ein schematisches Blockschaltbild einer Ausführungsform der Erfindung.

### Beschreibung von Ausführungsbeispielen

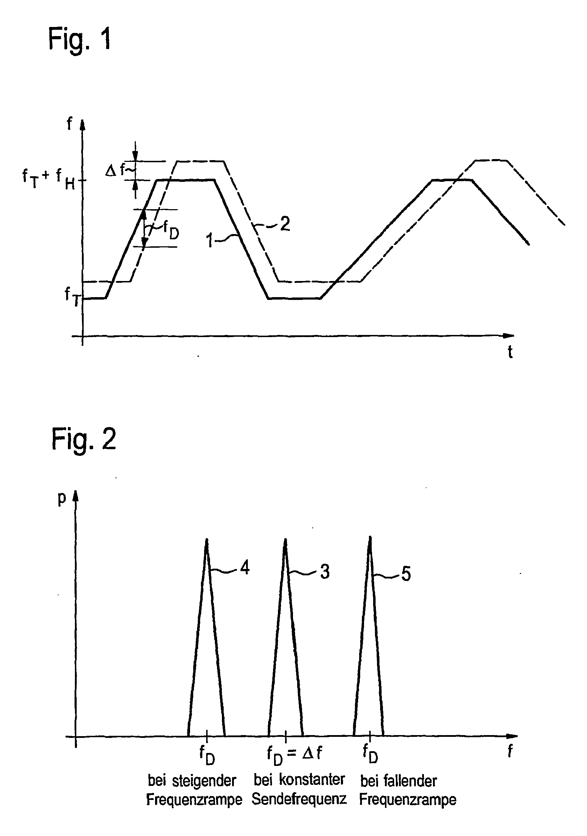

In Figur 1 ist ein Frequenz-Zeit-Diagramm dargestellt, das beispielhaft den zeitlichen Verlauf des Sendesignals 1 sowie des Empfangssignals 2 darstellt. Das Sendesignal 1, das durch die durchgezogene Linie dargestellt wird, steigt hierbei, ausgehend von einer Trägerfrequenz f_{T} in Form einer ersten Frequenzrampe auf die Frequenz f_{T} + f_{H} an und fällt in einer zweiten Frequenzrampe, die beispielsweise nach einer gewissen Verharrungszeit bei der Frequenz f_{T} + f_{H} wieder auf die ursprüngliche Trägerfrequenz f_{T} ab. Hierbei weist die abfallende Rampe betragsmäßig die gleiche Steigung auf, wie die ansteigende Rampe. Anschließend wiederholt sich eine steigende und eine fallende Rampe, die ebenfalls, ausgehend von der Trägerfrequenz f_{T}, um den Frequenzhub f_{H} ansteigt. Diese dritte und vierte Frequenzrampe weisen hierbei eine geringere Steigung auf als die vorhergehenden, ansteigenden und fallenden Frequenzrampen, wobei die dritte, steigende Rampe und die vierte, fallende Rampe wiederum betragsmäßig die gleichen Steigungen in der Frequenz aufweisen. Hierdurch entsteht ein rampenförmig frequenzmoduliertes Sendesignal 1, das von einer Sendeantenne ausgesandt wird, an Objekten innerhalb des Sensorerfassungsbereichs reflektiert wird und dessen reflektierte Teilwellen von einer Empfangsantenne wieder empfangen werden. Infolge der Laufzeit, die das Sendesignal für die Entfernung zum Objekt und zurück benötigt, erfährt das Empfangssignal 2 gegenüber dem Sendesignal 1 eine Zeitverschiebung entlang der t-Achse sowie infolge des Doppler-Effekts des bewegten Objektes eine Frequenzverschiebung, woraufhin das Empfangssignal 2 gegenüber dem Sendesignal 1 zum einen zeitlich verschoben ist, zum anderen eine Frequenzverschiebung erfährt. Hierbei macht die Frequenzverschiebung infolge des Doppler-Effektes den Unterschied Δf aus und wäre lediglich in Bereichen konstanter Sendefrequenz zwischen den Rampen messbar. Während steigender oder fallender Rampen ergibt sich zwischen dem Sendesignal 1 und dem Empfangssignal 2 die Verschiebung f_{D}, die zum einen durch die Laufzeit des Sendesignals und zum zweiten durch den Doppler-Effekt des bewegten Objektes verursacht wird. Durch die Kenntnis der Frequenzverschiebung (f_{D}) während einer Rampe ist es daher nicht möglich, eindeutig den Abstand d oder die Relativgeschwindigkeit vrel zu bestimmen. Hierzu wird das Empfangssignal 2 mit dem momentanen Sendesignal 1 mittels eines Empfangsmischers gemischt, wodurch ein Frequenzpeak entsteht, der beispielsweise in Figur 2 dargestellt ist. Aus der Frequenz f_{D} dieses Frequenzpeaks, der sich infolge des Frequenzunterschieds des Empfangssignals 2 und dem Sendesignal 1 ergibt, ist es jedoch möglich, eine Kombination von Abständen d und Relativgeschwindigkeit vrel anzugeben, die infolge der Frequenzverschiebung (f_{D}) möglich sind. Es ergibt sich demnach aus der Frequenzverschiebung f_{D} eine Linearkombination bezüglich des Abstands d und der Relativgeschwindigkeit vrel, die keine eindeutigen Werte liefert.

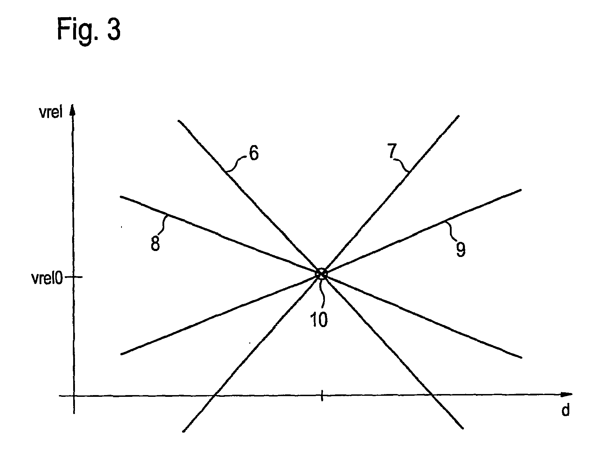

In Figur 2 ist die Leistung von Frequenzpeaks infolge der Mischung des Empfangssignals 2 und des Sendesignals 1 in Abhängigkeit der Frequenz f aufgetragen. Hierbei ist ein erster Frequenzpeak 3 aufgetragen, der eine Frequenzverschiebung f_{D} = Δf aufweist, die das Mischerausgangssignal darstellt, das während konstanter Sendefrequenzen messbar ist. Wird ein Objekt während einer steigenden Frequenzrampe erkannt, so wird bei einem langsameren Objekt, das sich dem eigenen Fahrzeug annähert, der Frequenzpeak f_{D} hin zu kleineren Frequenzen verschoben, wie es durch das Signal 4 dargestellt ist. Wird das gleiche Objekt während einer fallenden Frequenzrampe gemessen, so verschiebt sich der Frequenzpeak 5 hin zu größeren Frequenzen. Durch die Bestimmung der möglichen Kombinationen aus Abstand d und Relativgeschwindigkeit vrel während einer steigenden Rampe ergibt sich in einem Relativgeschwindigkeit-Abstand-Diagramm, wie es in Figur 3 dargestellt ist, eine fallende Gerade, die alle möglichen Kombinationen aus Abstand und Relativgeschwindigkeit, die infolge der gemessenen Frequenz f_{D} möglich sind, als Gerade darstellt. Wird das gleiche Objekt mit gleichem Abstand und gleicher Relativgeschwindigkeit während einer fallenden Frequenzrampe gemessen, so ergibt sich hieraus eine weitere Gerade mit einer Steigung, die ein umgekehrtes Vorzeichen aufweist, wie sie beispielsweise in Figur 3 als Gerade 7 dargestellt ist Der Schnittpunkt beider vrel-d-Geraden 6, 7 ist hierbei die Kombination aus Abstand d0 und Relativgeschwindigkeit vrel0, die das erkannte Objekt tatsächlich hat. Werden nun während steigenden beziehungsweise fallenden Frequenzrampen mehrere Objekte erkannt, so entstehen hierdurch mehrere steigende und fallende Geraden 6, 7 und es ist nicht eindeutig feststellbar, welche Schnittpunkte dieser Geraden tatsächliche Objekte repräsentieren, da jede fallende Gerade 6 mehrere Schnittpunkte mit mehreren steigenden Geraden 7 aufweist. Um diese Mehrdeutigkeit aufzulösen, wird die dritte und vierte Frequenzrampe eingesetzt, die ebenfalls eine steigende und eine fallende Frequenzrampe umfassen, wobei beide Frequenzrampen eine unterschiedliche Steigung zu der ersten und zweiten Frequenzrampe aufweisen. Hierdurch entstehen weitere Geraden 8, 9, deren Steigungen im vrel-d-Diagramm ebenfalls betragsmäßig geringere Steigungen aufweisen als die Geraden 6, 7. Diese weiteren Geraden 8, 9 kreuzen die betragsmäßig steileren Geraden 6, 7 im gleichen Punkt 10, sofern dieser Punkt ein reales Objekts ist. Handelt es sich bei einem Schnittpunkt 10 um einen Schnittpunkt 10, der kein reales Objekt repräsentiert, sondern nur durch zusätzliche Schnittpunkte der Geraden entsteht, also ein Scheinziel, so kreuzen sich die Geradenpaare mit steileren und flacheren Steigungen nicht gemeinsam in diesem Punkt. Durch den Einsatz von steigenden und fallenden Frequenzrampen mit unterschiedlichen Steilheiten wird eine Mehrzielfähigkeit des Radarsensors erzeugt.

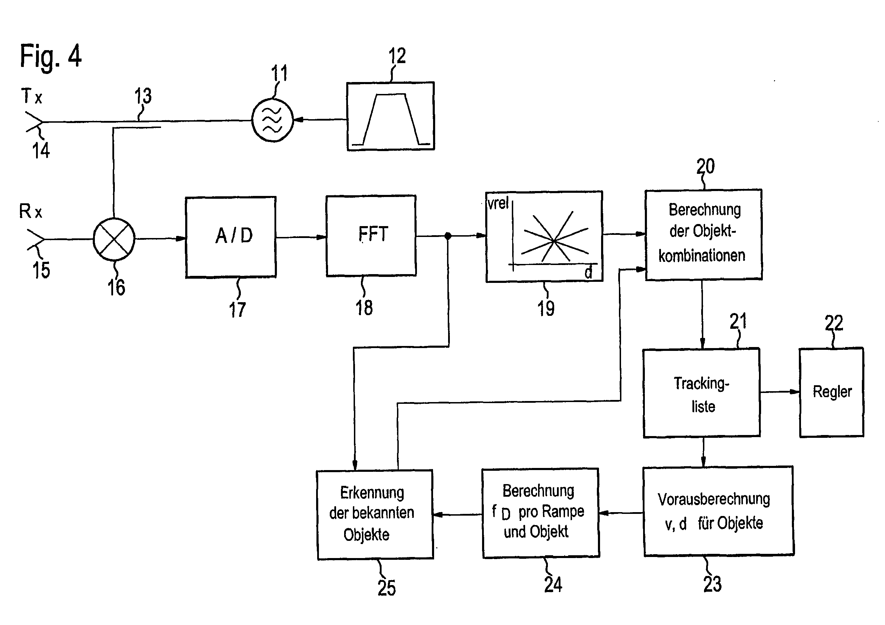

Weitere Schnittpunkte der Geraden, in denen sich nur zwei Geraden kreuzen, sind daher als Scheinziele klassifizierbar und für die Auswertung nicht relevant. Eine derartige Auswertung der Frequenzverschiebung zur Ermittlung des Abstands d0 und der Relativgeschwindigkeit vrel0 ist im Falle eines einzigen, erkannten Objektes oder zweier erkannter Objekte trivial. Werden hingegen viele Objekte durch den Radarsensor erkannt, beispielsweise sechs Frequenzpeaks während der Rampe 1, sieben Frequenzpeaks während der Rampe 2, acht Frequenzpeaks während der Rampe 3, sowie neun Frequenzpeaks während der Rampe 4, so ergeben sich im vrel-d-Diagramm nach Figur 3 insgesamt 6 * 7 * 8 * 9 = 3024 Geraden-Schnittpunkte, deren Auswertung eine enorme Rechenleistung benötigen. Demnach kann man davon ausgehen, dass bei einem linearen Anstieg der Anzahl erkannter Objekte der Rechenaufwand zur Auswertung der Geraden-Schnittpunkte 10 mit der vierten Potenz ansteigt, wodurch bei einer großen Anzahl erkannter Objekte schnell die Rechenleistung des Auswerterechenmittels erschöpft werden kann. Dieses kann verbessert werden, indem die Auswertung der Geraden-Schnittpunkte nach Figur 3 nur für die Objekte durchgeführt wird, die in vorhergehenden Messzyklen nicht detektiert wurden und demnach auch nicht in einer Trackingliste abgespeichert sind. Die Trackingliste kann hierbei beisoielsweise die Liste sein, aus der der Abstands- und Geschwindigkeitsregler seine Daten bezüglich der Regelobjekte erhält In Figur 4 ist ein Radarsensor dargestellt, der eine Frequenzregelung 12 aufweist, die beispielsweise die Rampenfunktion für die Sendefrequenz vorgibt. Diese Steuersignale werden an einen spannungsgesteuerten Oszillator (VCO) 11 weitergegeben, der ein Sendesignal erzeugt, das rampenförmig zwischen der unteren Trägerfrequenz f_{T} und der oberen Trägerfrequenz f_{T} + f_{H} rampenförmig mit den beschriebenen Steigungen verändert wird. Dieses Sendesignal wird an eine Sendeantenne 14 weitergegeben, die das Sendesignal in Richtung der zu erkennenden Objekte abstrahlt. Weiterhin ist ein Koppler 13 vorgesehen, der einen Teil der Sendeleistung auskoppelt und einem Mischer 16, der vorteilhafterweise als Ringmischer ausgeführt sein kann, zuführt. Weiterhin werden die von der Empfangsantenne 15 empfangenen Teilwellen, die die laufzeitbehafleten und dopplerverschobenen Sendesignale sind, dem Mischer 16 zugeführt. Der Mischer 16 mischt nun die momentanen Sende- und Empfangssignale und führt mittels daran angebrachten Mischerdioden eine Demodulation durch. Dieses demodulierte Mischersignal wird an einen nachgeordneten Analog-Digital-Wandler weitergegeben, in dem das Signal digitalisiert und zur weiteren Verarbeitung bereitgestellt wird. Weiterhin wird das Empfangssignal einer Fourier-Transformation 18 zugeführt, in der das Signal, das im Zeitbereich vorliegt, in den Frequenzbereich transformiert wird und damit in Form von Frequenzpeaks, wie sie in Figur 2 dargestellt sind, ausgewertet werden können. Diese Frequenzpeaks werden in einer weiteren Auswerteeinrichtung 19 in Geraden eines Relativgeschwindigkeits-Abstands-Diagramm umgerechnet, wobei jede Gerade eine mögliche Kombination aus Abstand und Relativgeschwindigkeit infolge eines Frequenzpeaks entsteht Für jedes Objekt wird demnach pro Rampe ein Frequenzpeak und damit eine Gerade erzeugt. Aus den Schnittpunkten dieser Geraden werden nun die tatsächlichen Objekabstände d0 und Relativgeschwindigkeiten vrel0 ermittelt, indem die Geradenschnittpunkte 10 ermittelt werden, in denen sich eine vrel-d-Gerade einer steilen, ansteigenden Rampe, eine vrel-d-Gerade einer steilen, abfallenden Rampe, eine vrel-d-Gerade einer flachen, ansteigenden Rampe und eine vrel-d-Gerade einer flachen, abfallenden Rampe schneiden. Diese Auswertung der Geradenschnittpunkte und damit die Ermittlung der tatsächlichen Objektkombinationen erfolgt in Block 20, woraufhin die erkannten Objekte mit ihren zugehörigen Daten, beispielsweise deren Abstand d0, deren Relativgeschwindigkeit vrel0 und möglicherweise deren Azimutwinkel phi in einer Trackingliste 21 abgespeichert werden. aus dieser Trackingliste werden einem Regler 22, der den Regelalgorithmus für eine Abstands- und Geschwindigkeitsregelung durchführt, zugeführt. Da die Berechnung der Objektkombinationen in Block 20 enormen Rechenaufwand benötigt, wird nun erfindungsgemäß die Trackingliste weiterverarbeitet, indem für jedes der darin vermerkten Objekte die zu erwartende Geschwindigkeit sowie die zu erwartende Relativgeschwindigkeit für den nachfolgenden Messzyklus vorausberechnet wird. Da in der Trackingliste 21 nicht nur die letzte Messung abgelegt ist, sondern mehrere, vorhergehende Messwerte abgelegt sein können, ist es möglich, die Veränderung des Abstands sowie der Relativgeschwindigkeit der einzelnen Objekte mittels einer Bewegungs-Differentialgleichung vorauszuschätzen. Die somit in Block 23 ermittelten Abstände und Relativgeschwindigkeiten der bekannten Objekte werden in Block 24 in zu erwartende Differenzfrequenzen f_{D} umgerechnet, die die Mischerausgangssignal in Form von Frequenzpeaks gemäß Figur 2 repräsentieren, die im nächsten Messzyklus zu erwarten sind. Im darauf folgenden Messzyklus werden die erkannten Frequenzpeaks, die am Ausgang der Fourier-Transformations-Einrichtung 18 vorhanden sind, zusätzlich einem Block 25 zugeführt, dem weiterhin die vorausberechneten Differenzfrequenzwerte f_{D} des Blocks 24 zugeführt werden. Aus dem Vergleich der vorausberechneten Frequenzpeaks und der tatsächlich gemessenen Frequenzpeaks ist es möglich, die Objekte zu erkennen, die bereits in der Trackingliste 21 abgelegt sind, da deren vorausberechnete Frequenzpeaks nur geringe Abweichungen zu den erkannten Frequenzpeaks der neuen Messung aufweisen. Werden derartige, vorausberechnete Frequenzpeaks tatsächlich erkannt, so wird dies der Berechnungseinrichtung 20, die die tatsächlichen Objektkombinationen berechnet, mitgeteilt, woraufhin diese aus dem vrel-d-Diagramm 19 nur noch die Geradenschnittpunkte auswerten muss, die von Objekten herrühren, die noch nicht in der Trackingliste 21 abgelegt sind. Dementsprechend müssen nur noch neu erkannte Objekte bezüglich ihres Abstands und ihrer Relativgeschwindigkeit berechnet werden, womit sich der Rechenaufwand zur Berechnung dieser neuen Objekte ebenfalls mit der vierten Potenz verringert. Hierdurch kann der Rechenaufwand, insbesondere bei der Detektion einer großen Anzahl an Objekten, wesentlich reduziert werden, ohne dass hierdurch die Erkennungszuverlässigkeit sinkt, da die Anzahl an neu hinzukommenden Objekten sich nicht schlagartig ändert. Erfindungsgemäß ist es weiterhin auch möglich, nur die Objekte im Speicher 21 in die Trackingliste einzutragen, die über eine Mindestanzahl an Messzyklen detektiert wurden, so dass nur kurzzeitig auftretende Reflexionen infolge von Messfehlem oder Scheinzielen nicht als tatsächliche Objekte berücksichtig werden.

## Patentansprüche

1. Radarsensor, der frequenzmodulierte Sendesignale (1) aussendet und an Objekten im Sensorerfassungsbereich reflektierte Teilwellen (2) empfängt, wobei für jedes reflektierende Objekt eine Frequenzverschiebung (f_{D}) des empfangenen Signals (2) gegenüber dem gesendeten Signal (1) bestimmt wird und aus der Kombination der Frequenzverschiebungen (f_{D}) verschiedener Modulationsfunktionen die Relativgeschwindigkeiten (vrel) und die Abstände (d) der erkannten Objekte bestimmbar sind, dass die in vorhergehenden Messzyklen erkannten Objekte in einem Speicher (21) abgelegt werden, deren Relativgeschwindigkeit (vrel) und deren Abstand (d) für einen zukünftigen Messzyklus vorausberechnet werden und die zu erwartenden Frequenzverschiebungen bestimmt werden **dadurch gekennzeichnet, dass** die Kombination der Frequenzverschiebungen verschiedener Modulationsfunktionen zur Bestimmung der Relativgeschwindigkeiten (vrel) und der Abstände (d) nur für Objekte durchgeführt wird, die noch nicht im Speicher (21) abgelegt sind.

2. Radarsensor nach Anspruch 1, **dadurch gekennzeichnet, dass** eine Modulationsfunktion einen Frequenzrampen ist.

3. Radarsensor nach Anspruch 2, **dadurch gekennzeichnet, dass** zur Bildung der Frequenzrampen die Trägerfrequenz (ft) zeitlich linear erhöht (f_{T}+f_{H}) und/oder verringert (f_{T}-f_{H}) wird.

4. Radarsensor nach einem der vorhergehenden Ansprüche, **dadurch gekennzeichnet, dass** die Modulationsfunktionen unterschiedliche Steilheiten aufweisen.

5. Radarsensor nach Anspruch 4, **dadurch gekennzeichnet, dass** für jede Steilheit einer Frequenzrampe eine ansteigende und eine abfallende Frequenzrampe vorgesehen ist.

6. Radarsensor nach einem der vorhergehenden Ansprüche, **dadurch gekennzeichnet, dass** die erkannten Objekte im Speicher in einer Trackingliste (21) abgelegt werden.

7. Radarsensor nach einem der vorhergehenden Ansprüche, **dadurch gekennzeichnet, dass** für die im Speicher (21) abgelegten Objekte der Abstand (d) und die Relativgeschwindigkeit (vrel) mittels einer Differentialgleichung vorausberechnet wird.

8. Radarsensor nach einem der vorhergehenden Ansprüche, **dadurch gekennzeichnet, dass** die Kombination der Frequenzverschiebungen (f_{D}) mehrerer Rampen durch ein Übereinanderlegen der zu den Frequenzverschiebungen gehörenden Geraden (6, 7, 8, 9) in einem Abstands-Relativgeschwindigkeitsdiagramm (19) und Auswertung der entstehenden Schnittpunkte (10) erfolgt.

9. Radarsensor nach einem der vorhergehenden Ansprüche, **dadurch gekennzeichnet, dass** zur Bestimmung der Relativgeschwindigkeit (vrel) und der Abstände (d) aus den Frequenzverschiebungen (f_{D}) eine schnelle Fouriertransformation (18) durchgeführt wird.

10. Radarsensor nach einem der vorhergehenden Ansprüche, **dadurch gekennzeichnet, dass** die Frequenzverschiebung (f_{D}) durch Mischung des Sendesignals (1) mit dem Empfangssignals (2) ermittelt wird.

11. Verfahren zur Bestimmung des Abstands (d) und der Relativgeschwindigkeit (vrel) von Objekten, die sich im Erfassungsbereich eines Radarsensors befinden, der frequenzmodulierte Sendesignale (1) aussendet und an Objekten reflektierte Teilwellen empfängt (2), wobei für jedes reflektierende Objekt eine Frequenzverschiebung (f_{D}) des empfangenen Signals (2) gegenüber dem gesendeten Signal (1) bestimmt wird und aus der Kombination der Frequenzverschiebungen (f_{D}) mehrerer unterschiedlicher Frequenzrampen die Relativgeschwindigkeiten (vrel) und die Abstände (d) der erkannten Objekte bestimmbar sind, dass die in vorhergehenden Messzyklen erkannten Objekte in einem Speicher (21) abgelegt werden, deren Relativgeschwindigkeit (vrel) und deren Abstand (d) für einen zukünftigen Messzyklus vorausberechnet werden und die zu erwartenden Frequenzverschiebungen (f_{D}) bestimmt werden **dadurch gekennzeichnet, dass** die Kombination der Frequenzverschiebungen (f_{D}) mehrerer unterschiedlicher Frequenzrampen zur Bestimmung der Relativgeschwindigkeiten (vrel) und der Abstände (d) nur für Objekte durchgeführt wird, die noch nicht im Speicher (21) abgelegt sind.

## Claims

1. Radar sensor, which emits frequency-modulated transmitted signals (1) and receives wave elements (2) reflected on objects in the sensor detection area, with a frequency shift (f_{D}) of the received signal (2) with respect to the transmitted signal (1) being determined for each reflective object, and in which case the relative velocities (vrel) and the distances (d) to the identified objects can be determined from the combination of the frequency shifts (f_{D}) of different modulation functions, with the objects identified in previous measurement cycles being stored in a memory (21), their relative velocity (vrel) and their distance (d) being calculated in advance for a future measurement cycle, and the frequency shifts to be expected being determined, **characterized in that** the frequency shifts of different modulation functions are combined in order to determine the relative velocities (vrel) and the distances (d) only for objects which have not yet been stored in the memory (21).

2. Radar sensor according to Claim 1, **characterized in that** one modulation function is a frequency ramp.

3. Radar sensor according to Claim 2, **characterized in that** the carrier frequency (ft) is increased (f_{T} + f_{H}) and/or reduced (f_{T} - f_{H}) linearly over time in order to form the frequency ramps.

4. Radar sensor according to one of the preceding claims, **characterized in that** the modulation functions have different gradients.

5. Radar sensor according to Claim 4, **characterized in that** a rising and a falling frequency ramp are provided for each gradient of a frequency ramp.

6. Radar sensor according to one of the preceding claims, **characterized in that** the identified objects are stored in a tracking list (21) in the memory.

7. Radar sensor according to one of the preceding claims, **characterized in that** the distance (d) and the relative velocity (vrel) are calculated in advance by means of a differential equation for those objects which are stored in the memory (21).

8. Radar sensor according to one of the preceding claims, **characterized in that** the frequency shifts (f_{D}) of a plurality of ramps are combined by superimposition of the straight lines (6, 7, 8, 9) associated with the frequency shifts, in a distance/relative velocity diagram (19) and the resultant intersections (10) are evaluated.

9. Radar sensor according to one of the preceding claims, **characterized in that** a fast Fourier transformation (18) is carried out in order to determine the relative velocity (vrel) and the distances (d) from the frequency shifts (f_{D}).

10. Radar sensor according to one of the preceding claims, **characterized in that** the frequency shift (f_{D}) is determined by mixing the transmitted signal (1) with the received signal (2).

11. Method for determination of the distance (d) and the relative velocity (vrel) of objects which are located in the detection area of a radar sensor which transmits frequency-modulated transmitted signals (1) and receives (2) wave elements reflected on objects, with a frequency shift (f_{D}) of the received signal (2) with respect to the transmitted signal (1) being determined for each reflective object, and in which case the relative velocities (vrel) and the distances (d) to the identified objects can be determined from the combination of the frequency shifts (f_{D}) from a plurality of different frequency ramps, with the objects identified in previous measurement cycles being stored in a memory (21), their relative velocity (vrel) and their distance (d) being calculated in advance for a future measurement cycle, and the frequency shifts (f_{D}) to be expected being determined, **characterized in that** the frequency shifts (f_{D}) of a plurality of different frequency ramps are combined in order to determine the relative velocities (vrel) and the distances (d) only for objects which have not yet been stored in the memory (21).

## Revendications

1. Capteur radar émettant des signaux d'émission modulés en fréquence (1) et recevant des ondes partielles (2) réfléchies sur des objets dans la zone de détection du capteur, dans lequel on détermine pour chaque objet réfléchissant un décalage de fréquence (f_{D}) du signal reçu (2) par rapport au signal émis (1) et dans lequel les vitesses relatives (vrel) et les distances (d) des objets détectés peuvent être déterminées à partir de la combinaison des décalages de fréquence (f_{D}) de différentes fonctions de modulation, de telle manière que l'on stocke dans une mémoire (21) les objets détectés lors de cycles de mesure précédents, dont la vitesse relative (vrel) et la distance (d) ont été calculées à l'avance pour un cycle de mesure ultérieur et que l'on détermine les décalages de fréquence attendus, **caractérisé en ce que** la combinaison des décalages de fréquence de différentes fonctions de modulation destinée à la détermination des vitesses relatives (vrel) et des distances (d) n'est effectuée que pour des objets qui ne sont pas encore stockés dans la mémoire (21).

2. Capteur radar selon la revendication 1, **caractérisé en ce qu'**une fonction de modulation est une rampe de fréquence.

3. Capteur radar selon la revendication 2, **caractérisé en ce que** pour former des rampes de fréquence, la fréquence porteuse (ft) est amenée à croître (f_{T}+f_{H}) et/ou à décroître (f_{T}-f_{H}) linéairement dans le temps.

4. Capteur radar selon l'une quelconque des revendications précédentes, **caractérisé en ce que** les fonctions de modulation ont des pentes différentes.

5. Capteur radar selon la revendication 4, **caractérisé en ce que** pour chaque pente d'une rampe de fréquence il est prévu une rampe de fréquence croissante et une rampe de fréquence décroissante.

6. Capteur radar selon l'une quelconque des revendications précédentes, **caractérisé en ce que** les objets détectés sont stockés en mémoire dans une liste de poursuite (21).

7. Capteur radar selon l'une quelconque des revendications précédentes, **caractérisé en ce que** la distance (d) et la vitesse relative (vrel) sont calculées à l'avance pour les objets stockés dans la mémoire (21) au moyen d'une équation différentielle.

8. Capteur radar selon l'une quelconque des revendications précédentes, **caractérisé en ce que** la combinaison des décalages de fréquence (f_{D}) de plusieurs rampes s'effectue par une superposition des droites (6, 7, 8, 9) appartenant aux décalages de fréquence dans un diagramme distance - vitesse relative (19) et par analyse des intersections (10) qui en résultent.

9. Capteur radar selon l'une quelconque des revendications précédentes, **caractérisé en ce que** pour déterminer la vitesse relative (vrel) et les distances (d) on effectue une transformation de Fourier rapide (18) à partir des décalages de fréquence (f_{D}).

10. Capteur radar selon l'une quelconque des revendications précédentes, **caractérisé en ce que** le décalage de fréquence (f_{D}) est déterminé par mélange du signal d'émission (1) avec le signal de réception (2).

11. Procédé pour la détermination de la distance (d) et de la vitesse relative (vrel) d'objets se trouvant dans la zone de détection d'un capteur radar qui émet des signaux d'émission modulés en fréquence (1) et reçoit (2) des ondes partielles réfléchies sur des objets, dans lequel on détermine pour chaque objet réfléchissant un décalage de fréquence (f_{D}) du signal reçu (2) par rapport au signal émis (1) et dans lequel les vitesses relatives (vrel) et les distances (d) des objets détectés peuvent être déterminées à partir de la combinaison des décalages de fréquence (f_{D}) de plusieurs rampes de fréquence différentes, de telle manière que l'on stocke dans une mémoire (21) les objets détectés lors de cycles de mesure précédents, dont la vitesse relative (vrel) et la distance (d) ont été calculées à l'avance pour un cycle de mesure ultérieur et que l'on détermine les décalages de fréquence (f_{D}) attendus, **caractérisé en ce que** la combinaison des décalages de fréquence (f_{D}) de plusieurs rampes de fréquence différentes destinée à la détermination des vitesses relatives (vrel) et des distances (d) n'est effectuée que pour des objets qui ne sont pas encore stockés dans la mémoire (21).
